# EUROPEAN PATENT APPLICATION

(11) **EP 1 096 783 A1**
(43) Date of publication of application: **02.05.2001**
(21) Application number: 99308517.4
(22) Date of filing: 28.10.1999
(51) Int. Cl.: H04N 1/387

(54) **Document imaging system**

(71) Applicant: Hewlett-Packard Company, A Delaware Corporation, Palo Alto, CA 94304 (US)
(72) Inventor: Cheatle, Stephen Philip, Bristol BS9 2AU (GB)
(74) Representative: Lawrence, Richard Anthony

(57) **Abstract**

The present invention relates to the use of an electronic camera in a platenless document imaging system in which the document image is a composite image formed from a mosaic of overlapping images (51,52) captured by the camera. Residual misalignment between overlapping mosaiced images is reduced by identifying in at least one overlap area (50) along adjacent edges (68,70) of adjacent image tiles (51,52) the locations of pixels representing one or more matched pairs of identifiable image features (75,95) present in both adjacent image tiles (51,52). Error vectors (98) are generated associated with each matched pair of features (75,95), a matched feature error vector (98) having the property that if the location in the current image tile (52) of a pixel (85) associated with an image feature (75) is shifted according to said error vector (98), then the locations of the same image features (175) in the warped current image tile (152) and warped adjacent image tile (151) are brought together to reduce the misalignment. A full set of error vectors (100) is generated by extrapolating and interpolating from the matched feature error vectors (98), extending along a corresponding edge (68) of the current image tile (52) in a direction transverse to this edge (68) towards an opposite edge (63), with each error vector (100) in the full set of error vectors having a magnitude with a contribution from the matched feature error vectors (98) that is progressively reduced away from said overlapping edge (68). The error vectors (100) are used in an adjusted transform based on an initial transform to reduce misalignment in a composite image of the document.

## Description

The present invention relates to the use of an electronic camera in a platenless document imaging system in which the document image is a composite image formed from a mosaic of overlapping images captured by the camera.

In recent years, document scanners have become commonplace. Although these work well and are relatively inexpensive, a flatbed or platen-based document scanner occupies a significant amount of scarce desk space.

The use of a camera to take a photograph of a document consisting of text and/or images offers one way of dealing with the problem of wasted desk space. An electronic camera would need to have a detector with about 40 megapixel resolution in order to have a resolution over an A4 sized document comparable with that of the resolution of a typical document scanner, typically about 24 dots/mm (600 dpi). Such high-resolution detectors cost much more than the total cost of a desktop scanner.

As a result, it has been proposed to use an electronic camera with an actuator to scan the field of view of the camera over a document, and so form a composite image of the document from a number of overlapping image tiles. This permits less expensive lower resolution detector arrays to be used to build up an image of a document with a resolution comparable with that of a conventional document scanner. See, for example, patent document US 5,515,181.

A necessary limitation with this approach is the fact that the image tiles must have some overlap, because it is impractical to use an actuator which moves the camera so precisely that tiles will fit together with no overlap.

One conventional approach to fitting together overlapping tiles involves identifying features in the image of one tile in an overlap region and matching this against a corresponding feature in an adjacent tile's overlap region.

Conventional feature matching approaches suffer from various difficulties. First, computational algorithms to identify and match features can be relatively slow compared with the process of gathering the images, which limits the throughput of a scanning camera document imaging system. Second, many documents have significant areas of blank space, for which it is not possible to match features. This necessitates the use of larger overlap areas to increase the likelihood that there will be suitable matching features in the overlap areas, with the result that more images must be captured. Third, it is possible that features will be incorrectly matched, particularly for text based documents in which common letters repeat frequently.

Another problem is that an image from an inexpensive camera will have some image distortion, particularly towards the edges of the field of view. The distortion is therefore strongest in the overlap region between tiles, which makes it more difficult to achieve a good overlap.

Methods for building composite images use tile transforms consisting of simple geometric models such as for correcting radial distortion, scale, rotation, translation, skew and perspective distortion. Models of this form typically contain eight parameters, or twelve parameters if radial distortion is corrected as well. Although these models can produce reasonably good results, small inaccuracies can occur for the following reasons:
a) The physical apparatus behaves in a way that is not fully described by the model, for example due to optical misalignments in the lens.
b) The values used for parameters in the model are not quite correct. This may be because of calibration inaccuracies, variations between the apparatus used for calibration and that used for later image capture. Alternatively, in the case that model parameters are optimised based on actual image content, then the data used to fit the model may be inaccurate and/or the fitting process may distribute the remaining error across the whole tile.

The problem with the small residual errors of such techniques is that when two adjacent tiles are warped into a composite, the pixels from the edge of each image are slightly mis-positioned in the composite image, the mis-positioning for each image tile being slightly different, resulting in a small but noticeable discontinuity at the join.

One prior art solution to this problem is to blend the pixels in the overlap region of the composite, thus disguising the slight mis-positioning. Blending works well for natural scenes where precise alignment is not critical. However, for images of documents containing sharp transitions between black and white for example, blending can cause unacceptable blurring of lines or text characters. The latter is a particular problem if the text image is to be subject to later processing such as thresholding or optical character recognition (OCR).

As a result of problems such as these, scanning camera-based document imaging systems cannot yet compete with flatbed or platen-based document scanning systems.

It is an object of the present invention to provide an image capture system using a scanning electronic camera that addresses at least some of these problems.

Accordingly, the invention provides a method of capturing an image of a document using an image capture system, the image capture system comprising: an image capture device for capturing a plurality of overlapping image tiles of the document, each image tile comprising an array of image pixels and overlapping with each adjacent image tile along edges of each tile, and electronic processing means by which the plurality of image tiles is warped into a composite image of the document, each tile forming one part of the composite image and each such part overlapping adjacent parts, characterised in that the warping of an image tile into the composite image involves an adjusted tile transform which is a combination of an initial tile transform that is sufficient only to warp an image tile with residual misalignment in overlapping adjacent parts of the composite image, and an adjustment transform to said image tile that serves to reduce said misalignment, the adjustment transform being generated from adjacent image tiles by matching image features in the overlap areas of adjacent tiles and by using the initial transforms for those adjacent image tiles to determine from misalignment between pairs of matching features for at least one of said adjacent tiles, the amount by which image features in one or more image tiles would need to be shifted in order to reduce said misalignment.

In general, transforms used to warp an image tile into a composite image can involve not only a forward transform that maps an image tile to a composite image, but also an inverse transform that maps part of the composite image to said image tile.

In a preferred embodiment of the invention, the adjustment transforms for at least some of the image tiles are generated sequentially using an initial transform for a current image tile and an adjusted tile transform for a previous image tile, and this adjusted tile transform depends on the initial transform for that previous image tile.

Preferably, the initial transform is an inverse initial transform, and the adjustment transform adjusts the locations where pixels are re-sampled in an image tile when the image tile is warped into the composite image.

The adjustment transform is empirically derived from the pairs of matching features, for example as a distortion mesh that is extrapolated and/or interpolated across an image tile The adjustment transform therefore may act as a piecewise adjustment to an image tile, sufficient to reduce residual misalignment.

In a preferred embodiment of the invention, the method comprises the steps of:
i) identifying in at least one overlap area along adjacent edges of adjacent image tiles, including a first overlap area between a current image tile and an adjacent previous image tile, pixel locations representing one or more matched pairs of identifiable location identification features present in both adjacent image tiles;
ii) generating from the locations of one or more matched pairs of location identification features, a set of matched feature error vectors across at least one overlap area of the current image tile, the matched feature error vectors having the property in an overlap area that if locations in the current image tile are shifted according to the matched feature error vectors prior to the initial tile transform for the current tile, then the misalignment between corresponding location identification features in the transformed current image tile and transformed previous image tile is reduced;
iii) using the set of matched feature error vectors in the adjustment.

The set of matched feature error vectors may be used to estimate error vectors for all locations in the current image tile which are re-sampled during a warping process.

In practice, pixel locations of matched pairs of identification location features may be located to sub-pixel accuracy.

Thus, when the current image tile is warped into the composite image, the residual error relative to the previously warped image tile is reduced.

It is particularly advantageous if a plurality of error vectors are generated across the current image tile, the contribution to each error vector from the matched feature error vectors decaying away from the overlap area(s). Thus the adjustment to each image tile is greatest where the misalignment needs to be reduced, and is reduced to zero at or before the edge opposite the overlap.

Preferably, the plurality of error vectors are generated across at least one overlap area by:
iv) extrapolating and/or interpolating from the matched feature error vector(s) a plurality of edge error vectors that extends along at least one corresponding edge of the current image tile that overlaps with an edge of an adjacent image tile.

Then, a full set of error vectors may be generated across the current image tile by extrapolating from said plurality of edge error vectors, in a direction transverse to the corresponding overlapping edge of the current image tile between the overlapping edge and an opposite edge of the current image tile. Each error vector in the full set of error vectors preferably has a magnitude with a contribution from said edge error vectors that is progressively reduced away from said overlapping edge.

Because the error vectors are tapered down away from the overlap region, the adjustment in the transformed image tiles necessary to reduce, and preferably eliminate, misalignment is greatest in the overlap region where this adjustment is actually needed. Any slight distortion in the transformed image tile necessary to achieve this fit therefore is gradually reduced away from the overlap region. This avoids sudden changes in the composite image in the areas where the tiles have been joined together.

Furthermore, the extrapolation of the error vectors across the image tile can be done either in a single direction, or in two directions, and particularly two transverse directions. The method therefore allows transformed image tiles to be adjusted either with respect to one neighbouring tile, or to two neighbouring tiles, which bound the first tile along two adjacent edges, particularly transverse edges.

The invention is also applicable to other forms of tile arrangement. For example, it is possible that in a staggered image tile capture arrangement, that an image tile could have up to two previous tiles overlapping each edge. Matching image features and error vectors would then be determined for each previous image tile along one edge of the current image tile.

For example, in step i) the locations of matched pairs of features can be identified also in a second overlap area between the current image tile and another, or second, previous adjacent image tile. Then there would be two transverse edge sets of error vectors for adjacent transverse edges of the current image tile that overlap respectively with the adjacent two previous image tiles, the full set of error vectors being a combination, for example a resultant average, of the extrapolation of each of the preliminary sets of error vectors between each overlapping edge and corresponding opposite edge.

Generally, there may be more than two image tiles, and the residual misalignment is corrected between adjacent tiles sequentially one tile at a time. This avoids the inherent complexity of having to perform a global best-fit adjustment across all transformed image tiles. Such global adjustments can only be done after all image tiles have been captured by the electronic camera. In contrast, the method according to the invention allows the image tiles to be transformed with adjustments to achieve a better fit between image features during the time taken for the camera to capture later image tiles. The necessary computation may therefore be reduced and performed throughout the image capture process. The complete joined image may therefore be available shortly after the last image tile has been captured by the camera.

Because electronic detectors are usually rectangular, if there are at least four transformed image tiles, these may each have four sides and be similarly oriented with respect to each other in rows and columns to form a square or rectangular array across the composite image. The sequential correction can then be performed across a first row along one edge of the composite image, and then progressively across sequential rows.

The invention will now be described by way of example, with reference to the accompanying drawings, in which:
Figure 1 is a schematic drawing of an image capture system used with a method according to the invention, showing how an electronic camera images a document with overlapping image tiles;
Figure 2 is a diagram showing how a forwards initial image transform can be used to map pixels locations from the co-ordinate system of an image tile to a transformed co-ordinate system of a composite image consisting of overlapping neighbouring unadjusted transformed image tiles that have some residual misalignment;
Figures 3, 4 and 5 are diagrams illustrating how the residual misalignment between adjacent unadjusted image tiles can be reduced with a method according to the invention.

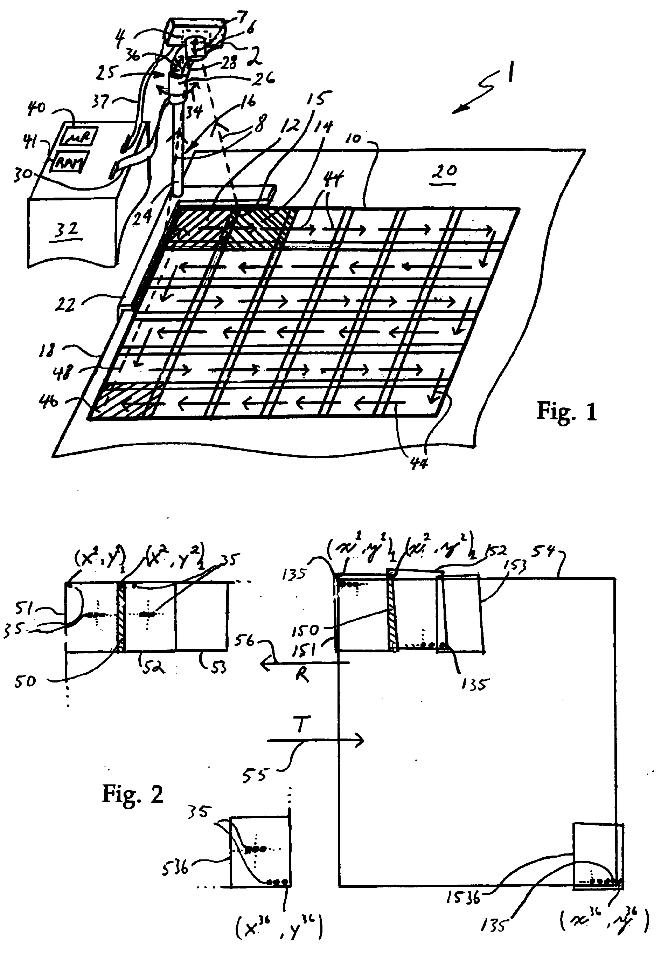

With reference to Figure 1, an image capture system 1 for imaging a document 10, for example a document of A4 size, includes a conventional electronic camera 2 with a CCD detector array 4 having a relatively moderate resolution of 480 by 640 pixels. A lens 6 with an autofocus mechanism 7 has a field of view 8 directed at a portion 12 of the document 10, shown in outline and cross-hatching. A total of thirty-six such portions cover the document 10. Each portion overlaps slightly with its neighbouring portions, as shown by the different angled cross hatching shown for one neighbouring portion 14. The tiles 12 and 14 therefore overlap in an overlap area 15.

The camera 2 is mounted atop a stand 16 that is affixed to an edge 18 of a work surface 20. The stand 16 has at its base a right-angled bracket 22 that is used both to fix the stand 16 to the work surface 20 and to align correctly the document 10 with respect to the camera 2. A cylindrical post 24 extends vertically from the right-angled corner of the bracket 22. Between the top of the post 24 and the camera 2 is a motorised actuator mechanism 25. The mechanism 25 comprises atop the post 24 a cylindrical joint 26 that is coaxial with the post 24, and above this an arcuate tilting arm 28 which is connected to the base of the camera 2. The actuator mechanism is connected by a ribbon cable 30 to a controller unit 32, which may, for example, be an expansion card in a personal computer. The cylindrical joint 26 can rotate 34 the camera about a vertical axis, and the arcuate arm 28 can rotate 36 the camera about a horizontal axis.

Alternatively, if the camera is mounted directly above the document, for example being roughly centered above the document, then the actuator may have two horizontal axes of rotation.

The controller unit 32 is connected by a second ribbon cable 37 to the electronic camera 2 in order to control the operation of the camera, and in particular as shown in Figure 2, to download from the camera thirty-six overlapping image tiles 51,52,536 taken of the document 10. The controller unit 32 will have a microprocessor (µP) 40, and a memory (RAM) 41 and may, of course, be connected to a conventional removable storage device and display (not shown).

Optionally, some of the functions of the controller unit 32, such as the microprocessor 40 and memory 41 may be incorporated in the electronic camera 2.

As shown in Figure 1, the camera lens 6 is in a start position in which the lens 6 looks downwards nearly vertically onto the portion 12 of the document 10 closest to the corner of the angle bracket 22. The camera 2 is stationary when the controller unit 32 captures an image of each document portion 12,14. Between captured images the actuator 25 is controlled by the controller unit 32 to move between document portions according to a predetermined pattern, illustrated by head-to-tail arrows 44, until a last document portion 46 is reached, whereupon the camera 2 is moved back to the start position, as shown by dashed line arrow 48. During this movement, the overlap areas 15 between each document portion 12,14,46 are predetermined, as are therefore, also the corresponding overlap areas 50 between image tiles 51,52,536.

Because none of the document portions 12,14,46 is presented directly face-on to the lens 38, the captured image of each image tile 51,52,536 will have some perspective distortion, also called "keystone" distortion. Therefore, both the document portions 12,14,46 and the overlap areas 15 will not in general be rectangular (as drawn for clarity), but trapezoidal. In addition, unless an expensive lens is used, the image on the detector 4 will in general have some lens distortion, most notably radial distortion.

In principle, the expected distortions of the image tiles can be calculated from a theoretical model of the imaging system and by measuring carefully the actual position of the lens 6. In practice, it is difficult to accurately model the performance of the lens 6 with respect to the document 10. Very small errors in the model can generate significant discontinuities in the composite image if the correction transforms are derived from the model.

Alternatively, it may be possible to derive empirical transform data to perform the necessary corrections, provided that the overlap areas 15 and orientations between imaged document portions 12,14,46 are repeatable each time the overlapping document images 51,52,536 are captured.

In either case, as shown in Figure 2, a forwards initial transform operator or function (Tₙ) can be derived which will map pixels, or more generally co-ordinates, in each image tile 51,52,536 onto the co-ordinate plane 54 of a composite image 54. In Figure 2, each of the thirty-six image tiles 51,52,536 captured by the detector array 4 has detector elements which generate image pixels 35 whose (x,y) co-ordinates are represented by (x¹,y¹) to (x³⁶,y³⁶). Each of the image tiles 51,52,536 can make an approximately correct contribution to a composite image 54 of the document 10 after a forwards initial transform function (Tₙ) has transformed 55 the (x,y) co-ordinates to those (*x,y*) for corresponding unadjusted transformed image tiles 151,152,1536. Each of the unadjusted transformed image tiles 151,152,1536 will then have overlap areas 150 that correspond with overlap areas 50 of the original image tiles 51,52,536.

In general, there will be some residual misalignment in the transformed overlap areas 150, such that if pixel values in the transformed co-ordinates were calculated according to standard re-sampling or warping techniques to generate the unadjusted composite image 54, then pixels 35 in adjacent image tiles 51,52 would not warp to correctly aligned pixels 135 in the transformed overlap area 150.

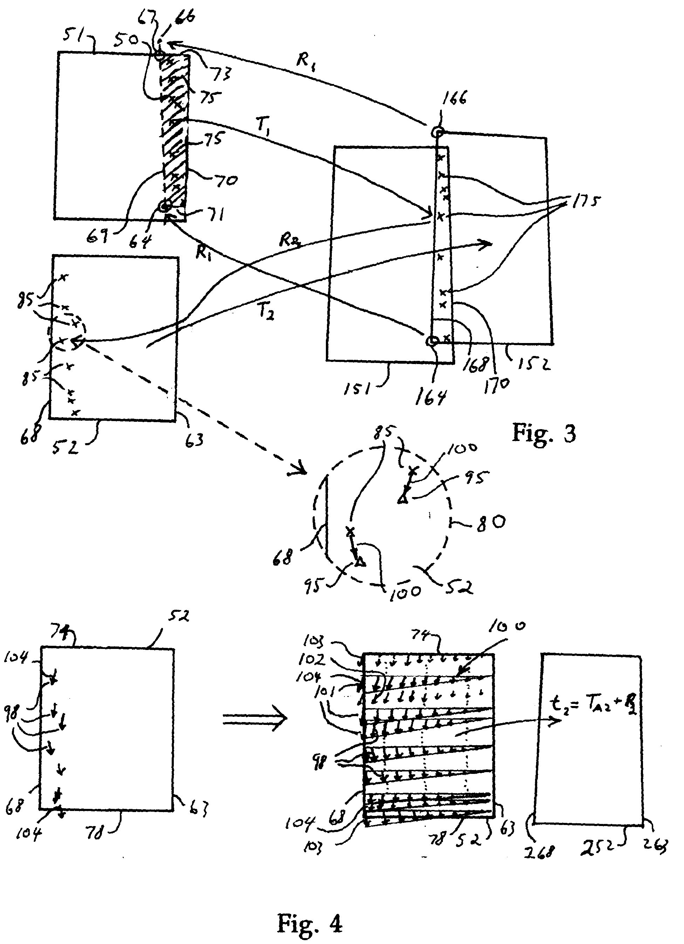

Figures 3, 4 and 5 show how this residual misalignment is corrected. The first corner image tile 51 is warped to a corner composite image tile 151 using an inverse initial transform R₁. As will be seen from the following description, in the case of this first image tile 51, there is no need for an adjustment transform. This corner tile 51 is thereafter referred to herein as a "previous" image tile. The next adjacent image tile 52 is then referred to herein as the "current" image tile 52. In the image warping process, when the current image tile 52 needs to be sampled at a location determined by the inverse initial transform, the location is first adjusted according to the adjustment transform prior to sampling, following which the current image tile becomes the previous image tile 52, with the next adjacent image tile 53 becoming the next current image tile, and so on.

Consider the first previous and current image tiles 51,52 to be captured by the electronic camera 2 and the corresponding forwards initial transformed image tiles 151,152 to be used to form an adjusted composite image 154. It is first necessary to correctly identify the bounds of the overlap area 50 in one of these two image tiles 51,52. In the illustrated example, the overlap area 50 is identified in the previous image tile 51. This is done by forwards transforming T₂ the adjacent current image tile 52, and then identifying in the transformed current image tile 152 the locations 164,166 of transformed current image tile corners along the edge 168 of the transformed current image tile 152 overlapping a corresponding edge 170 of the adjacent transformed previous image tile 151.

These transformed corner locations 164,166 are then transformed according to the inverse transform R₁ for the adjacent transformed previous image tile 151. This yields corresponding locations 64,66 in the co-ordinate system of the previous image tile 51. In the illustrated example, one of these inverse transformed co-ordinates 64 lies within the bounds of the previous image tile 51, and so this co-ordinate 64 can be used to define one corner of the identified overlap area 50. The other inverse transformed co-ordinate 66 lies outside the previous image tile 51, and so it is therefore necessary to locate a pixel 67 expected to lie within the identified overlap area 50. One way of approximating the bounds of the identified overlap area 50 is to construct a line 69 between the inverse transformed corner pixels 64, 66 and then finding the pixel 67 where this line crosses into the bounds of the previous image tile 51. A second line 71 can then be constructed from the corner pixel 64 entirely within the previous image tile 51 in a direction transverse to the edge 70 of the previous image tile 51 that is adjacent to the adjacent current image tile 52. The identified overlap area 50 is then within the bounds of the constructed lines 69,71 and edges 68,73 between these lines 69,71.

A standard feature identification technique is then used in order to identify appropriate features within the overlap area 50 of the previous image tile 51, for example "Introductory Techniques for 3-D Computer Vision" by E. Trucco and A. Verri, Prentice Hall 1998. There are many other feature detection methods which could alternatively be used. In order to perform the misalignment correction, it is necessary to identify at least one identifiable image feature 75 in the overlap area. Preferably, up to 10 such features 75 are located. If more than enough such features can be detected, then these are selected according to the quality of the feature with a preference given to corners, and also so that the selected features 75 are well spread out across the length of the overlap area 50. If a portion of the overlap area does not have any such image features 75, then this may be because there are blank areas or lines in the document. A line feature may only show misalignment in a direction perpendicular to the line. Although it will not be possible to determine misalignment in such blank portions, any such misalignment will usually not be as important as elsewhere, because misalignment in a blank area may not be noticeable.

Once the location identification features 75 are found, then the location of each of these is mapped according to the adjusted transform tₙ for the previous n'th image tile 51. The only time a previous image tile does not have an adjustment is the first image tile, and because the mapping involves the inverse initial transform, t₁ = R₁. The corresponding transformed location 175 is then identified in the adjacent transformed current image tile 152 and then inverse transformed R₂ to find the expected location 85 of each particular feature in the adjacent current image tile 52. As shown in the enlarged circular area 80, a search is then performed around each expected location 85 until the corresponding image identification feature 95 is found in the adjacent image tile 52.

Many image correlation search techniques are possible, working either on the image pixels directly or on some enhanced version of them such as an edge-detected version. Such techniques are capable of correctly aligning features to within fractions of a pixel. A simple correlation of pixel intensities within a small neighbourhood surrounding the feature can give adequate results.

The relative separation and orientation between the expected location 85 and the actual location 95 of each location identification feature gives a matched feature error vector 98 for each location identification feature. The error vector 98 in this example is defined as pointing from the estimated location 85 to the actual location 95 of the image feature. Each matched feature error vector 98 therefore has the property that if it acts on a corresponding pixel 35 in a current image tile 52,53,536, an image feature adjusted to the new location when transformed into the unadjusted warped image tile 151,152,1536, will align with a corresponding feature in an adjacent previous warped image tile.

Although it would be possible to define and use error vectors in combination with a forward initial transform, this complicates re-sampling of pixels to yield corrected composite image pixels.

In practice it is easier if each error vector 98 is used in re-sampling of the image tile as a correction to the corresponding location in the image tile resulting from the inverse initial transform for a pixel in the composite image tile. The calculated error vectors therefore are an adjustment transform performed after the inverse initial tile transform, and taken together, the adjustment transform and inverse initial tile transform act as an adjusted tile transform in the generation of an adjusted composite image tile 154.

Therefore, when each image tile 51,52,536 is related to a corresponding unadjusted warped image tile 151,152,1536 in an unadjusted composite image 54 by a forwards initial tile transform Tₙ that maps an image tile to a corresponding unadjusted warped image tile, and by an inverse initial tile transform Rₙ that maps an unadjusted warped image tile to a corresponding image tile, the method includes the steps of identifying the first overlap area 50 by:
a) identifying in the unadjusted composite image 54 the locations of corner pixels 164,166 in the current unadjusted warped image tile 152 (e.g. here, of the second captured image tile 52);
b) applying the inverse initial tile transform R₁ for the previous unadjusted warped image tile 151 (e.g. here, of the first captured corner image tile 51) to the locations of said two pixels 164,166 to identify the locations in the previous image tile 51 of two corresponding pixels 64,67;
c) identifying the overlap area 50 as the area bounded by the two corresponding pixels 64,67 and extending transversely to the edge 70 of the previous image tile 51 adjacent the current image tile 52.

Figure 4 shows how the matched feature error vectors 98 can be extrapolated and interpolated across the full extent of the image tile 52 to form a full set of error vectors 100. First, each matched feature error vector 98 can be extrapolated to the left towards image tile edge 68 and to the right towards the opposite image tile edge 63 by tapering the error vectors 100 such that there is no error vector shift on the opposite edge 63 with a maximum error vector shift 101 on the edge 68 towards the adjacent image tile 51. For simplicity, the tapering can be a straight linear tapering, although other forms of taper such as an exponential decay may alternatively be used. Although the matched feature error vectors 98 from the location identification features 75,85,95 are preferably spread along the length of the adjacent edge 68 of the image tile 52, other error vectors 102 can be interpolated between each of the original matched feature error vectors 98 to form a plurality of edge error vectors. This interpolation may be a linear or a cubic spline fit of both the magnitude and orientation of the original set of error vectors 100. Beyond the bounds of the endmost matched feature error vectors 104, error vectors 103 may be extrapolated to augment the edge error vectors. In order to avoid an unrealistic extrapolation in the case that the endmost matched feature error vectors 104 are not near the top and bottom edges 74,78 of the image tile 52, it is preferred not to extrapolate error vectors according to a cubic spline fit, but rather to assume that the error vectors beyond the endmost matched feature error vectors 104 towards the top and bottom edges 74,78 are the same as the endmost error vectors 104.

This process can be performed across the full extent of the image tile 52, to generate a full set of error vectors 100 calculated for each of the locations 35 used in the mapping process. The full set of error vectors can therefore be used as an adjustment transform T_{A2} on the current image tile 52 in combination with the inverse initial transform R₂ for that image tile in the re-sampling process. The adjustment transform T_{An} and inverse initial transform Rₙ together form an adjusted tile transform tₙ to substantially correct for residual misalignment in overlap areas 50. When the current image tile 52 is then transformed in the image warping process with the adjusted tile transform t₂, this will result in an adjusted corrected current image tile 252 with residual misalignment with an adjacent corrected previous image tile 151 that is reduced or substantially eliminated. In this process, the previous transformed image tile 151 does not have any error vector adjustments made to its transformed pixels 161, whilst one edge 263 of the adjusted transformed image tile 252 also does not have any such corrected pixels adjusted by any error vectors 100.

To summarise, an error vector 100 is generated by:
a) locating in a first overlap area 50 of the previous image tile (here, the corner image tile 51) the locations of pixels 35 representing one or more identifiable image features 75;
b) applying the adjusted tile transform for the previous image tile 51 to the locations of said one or more identifiable image features 75 to arrive at an adjusted transform location for 175 that feature;
c) applying to said adjusted transform location 175 the inverse initial tile transform R₂ for the current image tile 52 to arrive at an estimated feature location 85 in the current image tile 52;
d) searching in pixels 35 of the current image tile 52 about these estimated feature locations 85 to identify in the current image tile 52 the locations of pixels representing corresponding identifiable image features to find an actual feature location 95 in the current image tile;
e) generating from the estimated feature location 85 and the actual feature location 95 in the current image tile 52, the matched feature error vector 100 for the respective pair of location identification features 75,95.

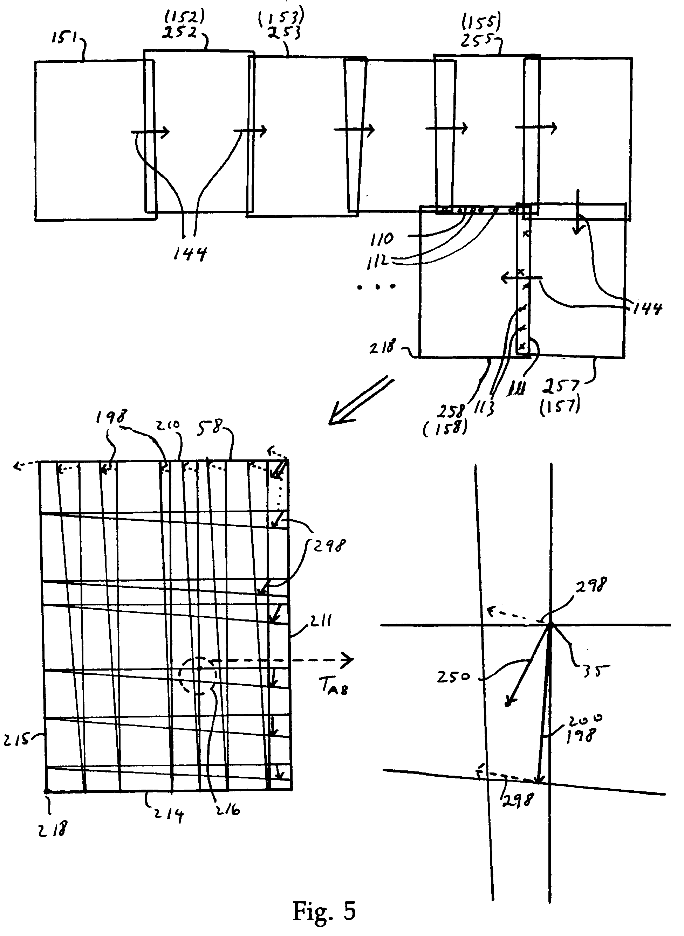

As Figure 5 shows, after the first adjusted transformed image tile 252 has been fit with a second adjacent transformed image tile 151, the same process is continued with another (i.e. a second) current adjacent transformed image tile 153 in the same manner as described above until the third image tile 153 is adjusted into an adjusted transformed image tile 253. During this next stage, no change is made to the preceding adjacent adjusted transformed image tile 252, with the edge of the current transformed image tile 253 furthest the preceding image tile 252 not being adjusted by any error vectors 100.

This process continues sequentially 144 in the same order that the original image tiles 51,52,536 were captured by the electronic camera 2. In the case of a 6 x 6 array of image tiles, when it comes time to adjust the eighth image tile 158 with the preceding adjusted transformed image tile 257, as can be seen from Figure 5 the eighth transformed image tile 158 overlaps along two edges 110,111 with adjacent adjusted transformed image tiles 255,257. It is therefore necessary to adjust the eighth unadjusted transformed image tile 158 simultaneously in two transverse directions in order to reduce misalignment between location identification features in the two adjacent adjusted transformed image tiles 255,257. This is done by first finding location identification features 112,113 along the two adjacent edges 110,111 after first identifying the corresponding overlap areas as described above. In doing this, it is better to work with the original unadjusted image tiles in the same way as described above in relation to Figure 3.

This results in two sets of matched feature error vectors 198,298 which are then separately extrapolated and interpolated across the full extent of the eighth image tile to produce two corresponding full sets of error vectors 200,300, with the magnitude of each error vector 200,300 tapering to zero between the adjacent edges 210,211 towards corresponding opposite edges 214 and 215 in the same way as described above in relation to Figure 4.

One section 216 of the eighth image tile 58 is shown enlarged to explain how the two full sets of error vectors 200,300 are combined to give a resultant full set of error vectors 250, by taking the vector sum of each pair of corresponding error vectors 200,300 and diving by two. This results in a resultant average error vector 250 for each pixel 35, or any other arbitrary location in the eighth image tile. In this case, only one location 218 of the eighth image tile furthest from the adjacent edges 210,211 is not shifted by any resultant error vector 250. Every other location in the eighth image tile is then adjusted in a direction according to the average resultant error vector 250 after the inverse transformation R₈ in the generation of the adjusted transformed image tile 258.

A linear decay function across the full extent of the tile results in a single zero error vector at the corner of the tile. Other decay functions could decay to zero before the edge of the tile is reached, resulting in larger areas of zero error vector locations.

Therefore, when the image tiles are generally rectangular and arranged in rows and columns, there is a corner tile for which no re-sampling locations are shifted according to any error vectors, and this is a first corner tile in the first row and first column. Each subsequent current image tile 52 which overlap previous image tiles along only one edge 68 has pixels 35 along the edge 63 furthest opposite said one edge which are not shifted according to any error vectors 100; and each subsequent current image tile which overlaps previous image tiles along two adjacent edges 110,111 has a pixel in the corner 218 furthest from said adjacent edges 110,111 that is not shifted according to any error vector 100.

Standard re-sampling techniques can then be used in order to complete the warping of the pixels in each image tile into corresponding pixels in the adjusted transformed image tiles.

The invention is most useful when the initial tile transform is a good approximation to a correct transform, for example correcting for most of the expected lens and/or perspective distortion. The invention then provides a number of advantages over prior art methods of fitting overlapping image tiles together in the field of document image capture. Instead of blending and hence blurring mis-aligned joins, additional minor shifts are made to the transform such that the features in the overlapping regions align more exactly. The additional shifts that are added in the re-sampling process can vary in both direction and magnitude at different points along the join to compensate for arbitrary small errors along the join between tiles and can thus solve the problems for any types of small aberrations.

The adjustment transform provides an empirically derived adjustment to an image tile. This adjustment method is simpler to implement than many type of fitting methods.

The distortion to the image caused by error vector shifts is decayed across the body of the tile to make them essentially unnoticeable in the adjusted composite image.

A further advantage of the invention is that the adjustment process can be done at the time each image tile in captured and warped into the adjusted composite image. Compared to global adjustment processes, which require that all tiles are captured before the final transform optimisation can be done and hence before the warping into the composite image can commence. Because error vectors are extrapolated and interpolated, it is not necessary to have a large overlap area between adjacent image tiles. This also speeds up document image capture. The current invention is thus likely to produce a final composite image in a shorter time than these global adjustment approaches. The invention is also relatively inexpensive to implement in processing hardware, which is an important feature in desktop imaging applications where the cost of the imaging device must be kept low.

## Claims

1. A method of capturing an image of a document using an image capture system (1), the image capture system comprising: an image capture device (2) for capturing a plurality of overlapping image tiles (51,52,536) of the document (10), each image tile comprising an array of image pixels (35) and overlapping (50) with each adjacent image tile along edges (68,70) of each tile (51,52,536), and electronic processing means (32) by which the plurality of image tiles (51,52,536) is warped into a composite image (154) of the document (10), each tile forming one part of the composite image and each such part overlapping adjacent parts, characterised in that the warping of an image tile (51,52,536) into the composite image (154) involves an adjusted tile transform (t) which is a combination of an initial tile transform (T,R) that is sufficient only to warp an image tile with residual misalignment in overlapping adjacent parts of the composite image, and an adjustment transform (T_{A}) to said image tile (51,52,536) that serves to reduce said misalignment, the adjustment transform (T_{A}) being generated from adjacent image tiles (51,52,536) by matching image features (85,95) in the overlap areas (50) of adjacent tiles (51,52,536) and by using the initial transforms (T,R) for those adjacent image tiles (51,52,536) to determine from misalignment between pairs of matching features (85,95) for at least one of said adjacent tiles (51,52,536), the amount by which image features (85,95) in one or more image tiles would need to be shifted in order to reduce said misalignment.

2. A method as claimed in Claim 1, in which the initial transform is an inverse initial transform (R), and the adjustment transform (T_{A}) adjusts the locations where pixels (35) are re-sampled in an image tile (51,52,536) when the image tile is warped into the composite image (154).

3. A method as claimed in Claim 1 or Claim 2, in which there are more than two image tiles (51,52,536), and the residual misalignment is corrected between adjacent tiles sequentially (144) one tile at a time.

4. A method as claimed in Claim 3, in which the image tiles (51,52,536) are captured by the image capture device (2) sequentially (44) in the same order as the residual misalignment is sequentially corrected (144).

5. A method as claimed in Claim 3 or Claim 4, in which there are at least four warped image tiles (151,152,1536) each with four sides and similarly oriented with respect to each other in rows and columns to form a square or rectangular array across the composite image (54), the sequential correction being performed across a first row along one edge of the composite image, and then progressively across sequential rows.

6. A method as claimed in any preceding claim, in which the method comprises the steps of:
i) identifying in at least one overlap area (50) along adjacent edges (68,70) of adjacent image tiles (51,52), including a first overlap area (50) between a current image tile (52) and an adjacent previous image tile (51), pixel locations (35) representing one or more matched pairs of identifiable location identification features (75,95) present in both adjacent image tiles (51,52);
ii) generating from the locations of one or more matched pairs of location identification features (75,95), a set of matched feature error vectors (98) across at least one overlap area (50) of the current image tile (52), the matched feature error vectors having the property in an overlap area (50) that if locations in the current image tile (52) are shifted according to the matched feature error vectors (98) prior to the initial tile transform for the current tile, then the misalignment between corresponding location identification features in the transformed current image tile (152) and transformed previous image tile (151) is reduced;
iii) using the set of matched feature error vectors (98) in the adjustment.

7. A method as claimed in Claim 6, in which the set of matched feature error vectors is used to estimate error vectors for all locations in the current image tile which are re-sampled during a warping process.

8. A method as claimed in Claim 6 or Claim 7, in which a set of error vectors is generated across the current image tile, the contribution to each error vector from the matched feature error vectors decaying away from the overlap area(s) (50).

9. A method as claimed in any of Claims 6 to 8, in which error vectors are generated across at least one overlap area (50) by:
iv) extrapolating and/or interpolating from the matched feature error vector(s) (100) a plurality of edge error vectors that extends along at least one corresponding edge (68) of the current image tile (52) that overlaps with an edge (70) of an adjacent image tile (51).

10. A method as claimed in Claim 9, in which following step iv):
v) a full set of error vectors is generated across the current image tile (52) by extrapolating from said plurality of edge error vectors, in a direction transverse to the corresponding overlapping edge (68) of the current image tile (52) between the overlapping edge (68) and an opposite edge (63) of the current image tile (52), with each error vector (100) in the full set of error vectors having a magnitude with a contribution from said plurality of edge error vectors that is progressively reduced away from said overlapping edge (68).

11. A method as claimed in any of Claims 6 to 10, in which:
vi) in step i) the locations of matched pairs of features (75,95) are identified also in a second overlap area between the current image tile (135) and another adjacent previous image tile (155); and
Vii) in step v) there are two transverse edge sets of error vectors (200,300) for adjacent transverse edges (ll0,lll) of the current image tile (135) that overlap respectively with the adjacent two previous image tiles (155,157), the full set of error vectors (250) being a combination of the extrapolation of each of the edge sets of error vectors (200,300) between each overlapping edge (110,111) and corresponding opposite edge (214,215).

12. A method as claimed in any of Claims 6 to 11, in which for one image tile (51) no pixels (35) are shifted according to any error vectors (100).

13. A method as claimed in Claim 12, in which: the tile for which no pixels are shifted according to any error vectors is a first corner tile (51) in the first row and first column; each subsequent current image tile (52) which overlap previous image tiles along only one edge has pixels (35) along the edge (63) furthest opposite said one edge which are not shifted according to any error vectors (100); and each subsequent current image tile which overlaps previous image tiles along two adjacent edges (110,111) has a pixel in the corner (218) furthest from said adjacent edges (110,111) that is not shifted according to any error vector (100).

14. A method as claimed in any of Claims 6 to 13, each image tile (51,52,536) being related to a corresponding unadjusted warped image tile (151,152,1536) in an unadjusted composite image (54) by an initial tile transform (Tₙ) that maps an image tile to a corresponding unadjusted warped image tile, and by an inverse initial tile transform (Rₙ) that maps an unadjusted warped image tile to a corresponding image tile, in which in steps i) and ii) a matched feature error vector (100) is generated by:
viii) locating in a first overlap area (50) of the previous image tile (51) the locations of pixels (35) representing one or more identifiable image features (75);
ix) applying the adjusted tile transform for the previous image tile (51) to the locations of said one or more identifiable image features (75) to arrive at an adjusted transform location for (175) that feature;
x) applying to said adjusted transform location (175) the inverse initial tile transform (R₂) for the current image tile (52) to arrive at an estimated feature location (85) in the current image tile (52);
xi) searching in pixels (35) of the current image tile (52) about these estimated feature locations (85) to identify in the current image tile (52) the locations of pixels representing corresponding identifiable image features to find an actual feature location (95) in the current image tile;
xii) generating from the estimated feature location (85) and the actual feature location (95) in the current image tile (52), the matched feature error vector (100) for the respective pair of location identification features (75,95).
